# EUROPEAN PATENT SPECIFICATION

(11) **EP 1 701 063 B1**
(45) Date of publication and mention of the grant of the patent: **22.01.2014**
(21) Application number: 04807702.8
(22) Date of filing: 24.12.2004
(51) Int. Cl.: F16H 25/20, H02K 7/06, H02K 11/00

(54) **LINEAR ACTUATOR**
LINEARER AKTUATOR
ACTIONNEUR LINÉAIRE

(30) Priority: 24.12.2003 JP 2003428069
(43) Date of publication of application: 13.09.2006
(73) Proprietor: Mitsuba Corporation, Kiryu-shi, Gunma 376-8555 (JP)
(72) Inventor: Inoue, Masaki, Kiryu-shi, Gunma 3768555 (JP); Hiruma, Hiroshi, Kiryu-shi, Gunma 3768555 (JP)
(74) Representative: Plaçais, Jean Yves
(86) International application number: PCT/JP2004/019345
(87) International publication number: WO 2005/061929

(56) References cited:
- EP-A1- 0 762 015
- EP-A2- 0 831 250
- JP-A- 2000 188 846
- JP-A- 2000 291 768
- JP-A- 2003 301 912
- JP-A- 2003 322 233
- US-A- 5 388 471

## Description

### TECHNICAL FIELD

The present invention relates to a linear actuator, and particularly to an electric feed screw type linear actuator which is for example effectively utilized for vertically moving a bed-plate of a medical/care bed or inclining the bed-plate of a back or knee.

### BACKGROUND ART

In a medical/care bed, to reduce burden of patient concerning food and sleep, a bed-plate of the bed is vertically moved or the bed-plate of the back or knee is inclined by an electric feed screw type linear actuator.

There is a conventional linear actuator of this kind comprising a shaft having a male thread portion, a worm gear speed reducer which reduces the rotation of a motor and transmits the rotation to the shaft, a female thread member (feeding nut) which is threadedly engaged with the male thread portion of the shaft and which moves forward and backward by the rotation of the shaft, a moving cylinder which is fixed to the female thread member and which moves forward and backward with respect to a housing, a brake plate which receives thrust at the time of rotation of the shaft for braking, and a one-way clutch which permits normal rotation of the shaft and prohibits reverse rotation of the shaft, wherein the moving cylinder vertically moves the bed-plate of the bed, or is connected to a link which inclines the bed-plate of the back or knee by means of a connecting tool (e.g., see patent document 1).
Patent Document 1: Japanese Patent Laid-open Publication No. 9-190225

Document EP0831250 discloses a linear actuator according to the preamble of claim 1.

### DISCLOSURE OF THE INVENTION

A linear actuator used for a medical/care bed is generally provided with a position detection apparatus so that a user can arbitrarily set a position of the bed-plate when the bed-plate of the bed is vertically moved or when the bed-plate of the back or knee is inclined. When the position detection apparatus uses a potentiosensor which converts the rotation amount of the shaft to voltage value, the potentiosensor is associated with a pinion provided on a shaft by means of a gear speed reducer.

When the linear actuator is assembled, aligning operation of origin points between a moving cylinder and the potentiosensor is carried out in another step. Moving cylinder and the potentiosensor are adjusted to predetermined positions and voltage values and then, a driven gear of the potentiosensor is meshed with a pinion of the shaft through a reduction gear of a gear speed reducer such that the voltage value of the potentiosensor is not deviated. At that time, when a potentiosensor whose voltage value is adjusted to a predetermined value is to be assembled, there is an adverse possibility that the driven gear is rotated when the driven gear is meshed with the pinion, and there is a problem that the position precision must be inspected again after the assembling operation and the operability is inferior.

An object of the present invention is to provide a linear actuator in which a position detection apparatus can precisely be assembled with excellent operability.

A linear actuator according to the present invention comprises the features according to claim 1.

According to the present invention, since the aligning operation of origin points between the moving cylinder and the position detection apparatus can be carried out by adjusting the positional relation between the moving cylinder and the position detection apparatus in the housing, it is possible to precisely assemble the position detection apparatus into the linear actuator with excellent operability.

The position detection apparatus comprises a potentiosensor which converts the rotation amount of the shaft into a voltage value, and the position detection apparatus is movably provided on the housing. With this, the origin point of the moving cylinder and the origin point of the voltage value of the potentiosensor can precisely be matched with each other. Therefore, it is possible to enhance the detection precision of the rotation amount of the shaft of the potentiosensor.

A driven gear is mounted on a sensor shaft of the potentiosensor, the driven gear is meshed with a pinion which rotates in unison with the shaft, and the potentiosensor can move in an axial direction of the moving cylinder or toward an axis of the moving cylinder. With this, since it is possible to prevent unnecessary rotation of each gear when the driven gear is meshed with the pinion, it is possible to assemble the various members precisely.

The potentiosensor can slide in the axial direction of the moving cylinder or toward the axis of the moving cylinder. With this, it is possible to mesh the driven gear with the pinion only by sliding the potentiosensor. Therefore, it is possible to easily assemble the potentiosensor to the linear actuator.

### BRIEF DESCRIPTION OF THE DRAWINGS

FIG. 1 is a front view showing an essential portion of a medical/care bed in which a linear actuator according to one embodiment of the invention is used, FIG. 1A shows a lying state and FIG. 1B shows a tilt-up state;
FIG. 2 is a plan view showing the linear actuator of one embodiment of the invention;
FIG. 3 is a front view thereof;
FIG. 4A is a sectional front view showing a mechanism section;
FIG. 4B is a sectional front view showing a support section;
FIG. 5A is a sectional view taken along the line a-a in FIG. 3, and FIG. 5B is a sectional view taken along the line b-b in FIG. 3;
FIG. 6 is a sectional side view taken along the line VI-VI in FIG. 4A;
FIG. 7 is a partially omitted sectional side view taken along the line VII-VII in FIG. 4A;
FIG. 8 is an exploded perspective view of a potentiosensor disposition portion as viewed from the side of a motor mounting portion;
FIG. 9 is a front view of the potentiosensor disposition portion showing the assembling operation of the potentiosensor, and FIG. 9 shows the potentiosensor disposition portion before it is assembled; and
FIG. 10 is a front view showing the potentiosensor disposition portion after it is assembled.

### BEST MODE FOR CARRYING OUT THE INVENTION

One embodiment of the present invention will be explained with reference to the drawings.

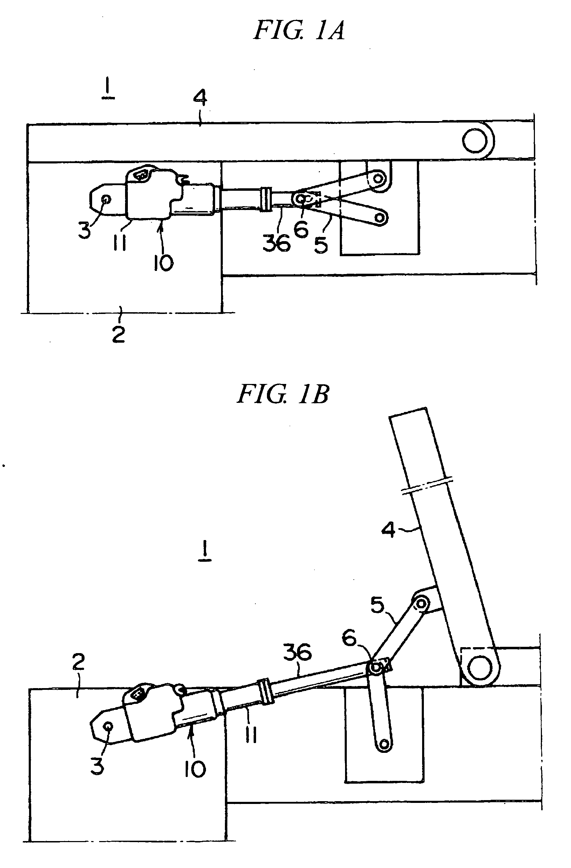

As shown in FIG. 1, a linear actuator according to the embodiment is for tilting up or lying a bed-plate of a back of a medical/care bed (bed, hereinafter). That is, a housing 11 located on the side of a fixed end of the linear actuator 10 is rotatably supported around a pivot 3 by a frame 2 of the bed 1. A tip end of a moving cylinder 36 located on the side of a free end of the linear actuator 10 is rotatably connected to a link 5 around a pivot 6. The link 5 is for tilting up and lying a bed-plate 4 of the back (bed-plate, hereinafter). In a state in which the moving cylinder 36 of the linear actuator 10 is shrunk, the bed-plate 4 is lying horizontally as shown in FIG. 1A, and if the moving cylinder 36 of the linear actuator 10 is extended, the bed-plate 4 tilts up as shown in FIG. 1B. The bed 1 is not limited to the structure in which the bed-plate 4 tilts up by the extension of the moving cylinder 36 of the linear actuator 10. A link mechanism may be constituted such that the bed-plate 4 tilts up by shrinking the moving cylinder 36 of the linear actuator 10.

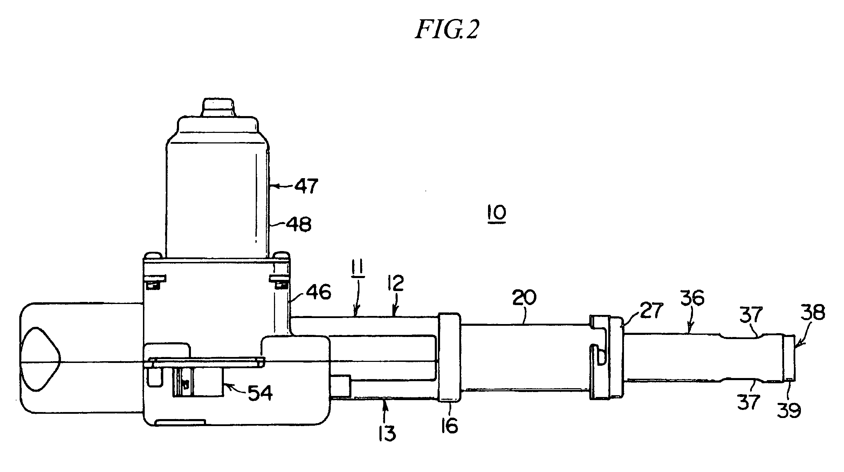

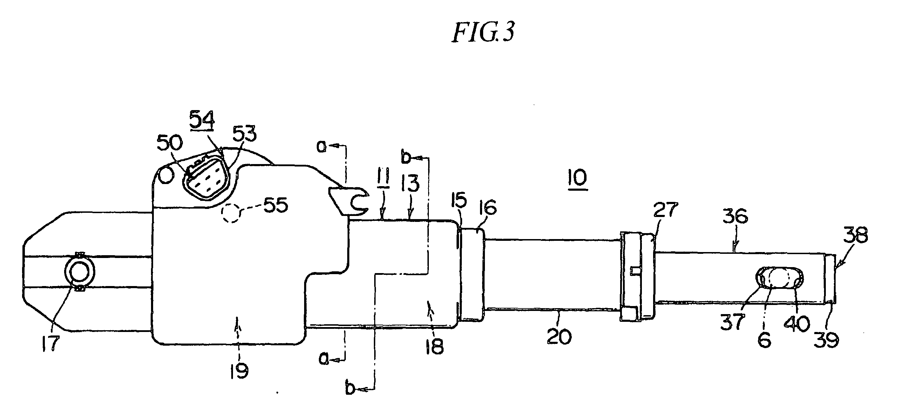

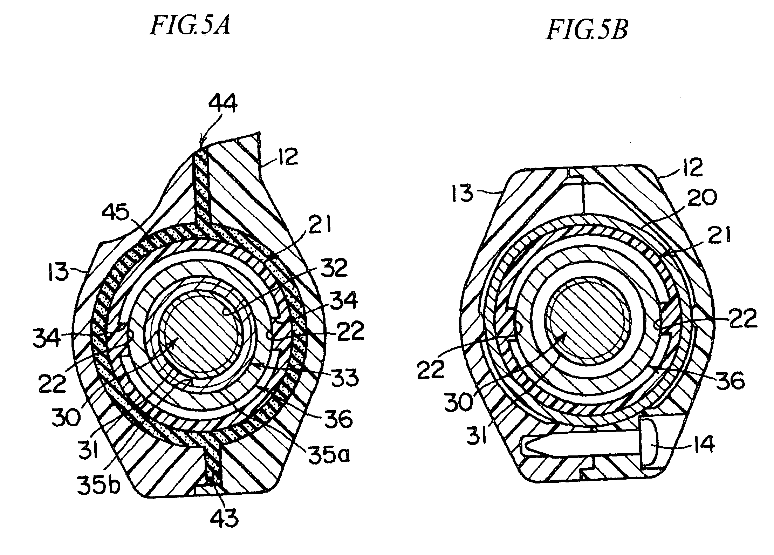

As shown in FIGs. 2 and 3, the linear actuator 10 includes the housing 11. As shown in FIG. 2, the housing 11 is formed into a substantially cylindrical shape comprising a combination of a first divided piece (first shell, hereinafter) 12 and a second divided piece (second shell, hereinafter) 13. The combined first shell 12 and the second shell 13 can be divided into the two shells in the axial direction of the housing 11. The first shell 12 and the second shell 13 are made of resin and formed into substantially semi-cylindrical shape, and in a state in which the first shell 12 and the second shell 13 are butted against and assembled with each other, they are fastened by a fastening tool 14 (see FIG. 5), and a metal band 16 is fit into a fitting portion 15 formed around an outer periphery of an opening. The metal band 16 can reliably prevent a tip end of the first shell 12 and a tip end of the second shell 13 from opening in the radial direction. A cylindrically formed connecting tool 17 is inserted into and fixed to an end of the housing 11 opposite from the band 16 in a direction perpendicular to the axis of the cylinder. The connecting tool 17 is constituted such that the pivot 3 for rotatably supporting the linear actuator 10 by the frame 2 of the bed 1 can horizontally be supported.

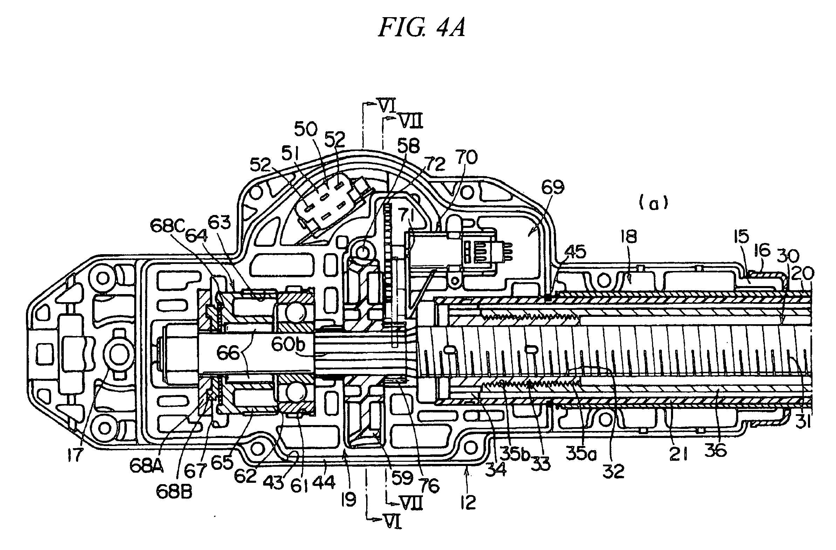

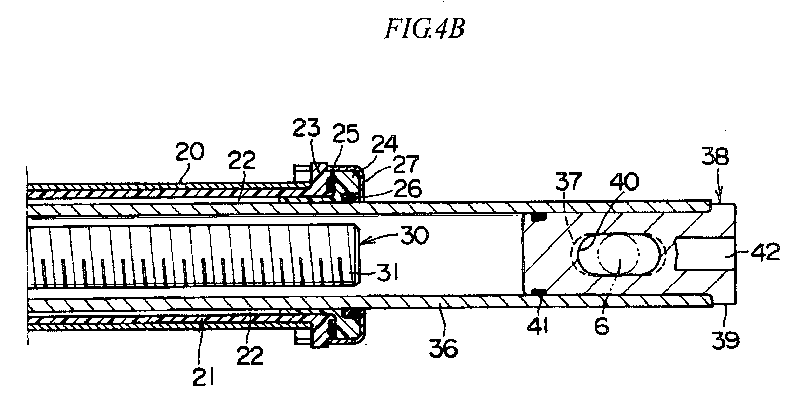

As shown in FIGs. 4A and 4B, a support section 18 and a mechanism section 19 are formed between opposed surfaces of the butted first shell 12 and the second shell 13 of the housing 11. One end of a reinforcing cylinder 20 is supported by the support section 18 of the housing 11 such that the reinforcing cylinder 20 is sandwiched between the first shell 12 and the second shell 13. The reinforcing cylinder 20 is made of iron that is one example of material having high mechanical strength and formed into a cylindrical pipe shape. One end of a support cylinder 21 is inserted into an inner periphery of the reinforcing cylinder 20 and supported therein. The support cylinder 21 is made of resin. An outer diameter of the support cylinder 21 is the same as an inner diameter of the reinforcing cylinder 20 and the support cylinder 21 is formed into a cylindrical pipe shape. The support cylinder 21 is supported in a state in which an outer periphery of the support cylinder 21 is fitted into the inner periphery of the reinforcing cylinder 20 and the support cylinder 21 is reinforced by the reinforcing cylinder 20. The support section 18 of the housing 11 is conventionally formed with the support cylinder 21, but since the support cylinder 21 is reinforced by the reinforcing cylinder 20, the length of the support section 18 can be shortened. Since the length of the support section 18 can be shortened, strength against deviated load of the housing 11 caused by a load from the bed-plate can relatively be enhanced. Further, the operability of the resin molding of the first shell 12 and the second shell 13 can be enhanced by reducing the housing 11 in size, deformation such as warp can be corrected, and a seal region between opposed surfaces can be set narrow.

As shown in FIGs. 4 and 5, a pair of detent members 22 for preventing the female thread member from rotating are provided on the inner peripheral surface of the support cylinder 21 over its substantially entire length. Each of the detent members 22 and 22 is formed into a thin and long keyway shape extending in the axial direction with constant width and constant height. The detent member 22 can be formed simultaneously at the time of resin molding of the support cylinder 21. Therefore, the detent members 22 and 22 do not increase the manufacturing cost of the linear actuator.

As shown in FIG. 4B, a flange 23 projects from an outer periphery of the tip end of the support cylinder 21. An end surface of the flange 23 on the side of the support section 18 is opposed to a tip end surface of the reinforcing cylinder 20. A cylindrical plug 24 is provided at its outer periphery with a flange. The plug 24 is fitted into a tip end opening of the support cylinder 21. A seal ring 25 is sandwitched between the abutted surfaces of the plug 24 and the flange 23. A seal ring 26 is sandwitched between sliding surfaces of an inner peripheral surface of the plug 24 and an outer peripheral surface of the moving cylinder 36. A fastening cap 27 is put on an outer side of the plug 24. The fastening cap 27 is engaged with the flange 23, thereby fastening the plug 24 and the seal rings 25 and 26 to the support cylinder 21.

A shaft 30 is supported on an axis of the support cylinder 21. A feeding male thread portion 31 is formed on an outer periphery of the shaft 30 corresponding to the support cylinder 21. A nut 33 as a female thread member is mounted on the male thread portion 31 such that the nut 33 can move forward and backward. A female thread portion 32 is threadedly engaged with the nut 33. A pair of detent members 34 are formed in an outer periphery of an end of the nut 33 on the side of the mechanism section 19 in a recessed manner. Each detent member 34 is formed into a keyway shape. The detent members 34 and 34 are axially slidably fitted to the pair of detent members 22 and 22 of the inner peripheral surface of the support cylinder 21. Therefore, the nut 33 slides on the support cylinder 21 in a state in which the nut 33 is prevented from rotating by the detent members 22 and 34. Since the detent members 22 and 22 are made of resin together with the support cylinder 21, it is possible to prevent noise from being generated when the nut 33 slides with respect to the support cylinder 21. A connecting male thread portion 35a is formed on an outer peripheral surface of the nut 33. A connecting female thread portion 35b formed in the inner peripheral surface of one end of the moving cylinder 36 is threadedly engaged with the connecting male thread portion 35a of the nut 33. The moving cylinder 36 is formed into a cylindrical pipe shape longer than the support cylinder 21. A tip end of the moving cylinder 36 projects forward from the plug 24 mounted on the support cylinder 21. An intermediate portion of the moving cylinder 36 is slidably supported by the plug 24. A space between the outer peripheral surface of the moving cylinder 36 and the inner peripheral surface of the plug 24 is sealed by the seal ring 26.

A pair of long holes 37 and 37 are formed in an end of the moving cylinder 36 opposite from the nut 33 such as to extend in the axial direction at locations opposed to each other. The long holes 37 and 37 are for connecting the moving cylinder 36 to the link 5 of the bed 1. A connecting tool 38 is slidably fitted into a tip end opening of the moving cylinder 36. The connecting tool 38 is a tool to connect a moving cylinder 36 with link 5. The connecting tool 38 is formed into a columnar shape having an outer diameter that is substantially equal to an inner diameter of the moving cylinder 36. A projecting end of the connecting tool 38 is formed with a flange 39 as a pressing portion that is formed into a columnar flange shape having an outer diameter that is substantially equal to the outer diameter of the moving cylinder 36 such that the flange 39 is opposed to a tip end surface that is a load receiving surface of the moving cylinder 36. A long hole 40 is radially formed in the fitting portion of the connecting tool 38 such as to extend in the axial direction. The long hole 40 is opposed to the long holes 37 and 37 of the moving cylinder 36. A seal ring 41 is fitted to a fitting side end of the connecting tool 38. The seal ring 41 seals a space between the outer peripheral surface of the connecting tool 38 and the inner peripheral surface of the moving cylinder 36. A tool insertion hole 42 is formed on a center line of a projecting side end surface of the connecting tool 38 in the recessed manner. If the connecting tool 38 is rotated by a tool inserted into the tool insertion hole 42, the long hole 40 and the long holes 37 and 37 of the moving cylinder 36 are aligned with each other. If the pivot 6 is inserted into the long holes 37 and 37 of the moving cylinder 36 and the long hole 40 of the connecting tool 38 from outside, the moving cylinder 36 is connected to the link 5. When the moving cylinder 36 pushes up the bed-plate 4, an end surface of the flange 39 of the connecting tool 38 pushes and comes into contact with the tip end surface of the moving cylinder 36. Therefore, even if the connecting tool 38 is not threadedly engaged with the moving cylinder 36, the driving force can be transmitted to the bed-plate 4. Even when the moving cylinder 36 is shrunk and the bed-plate 4 is moved downward, since a force for pressing the flange 39 and bring the same into contact with the tip end surface of the moving cylinder 36 is always applied to the long hole 40 of the connecting tool 38, the connecting tool 38 is not pulled out, and the driving force can be transmitted to the bed-plate 4 similarly.

As shown in FIGs. 4A, 5 and 6, a seal ring fitting groove 43 is formed in a mating surface of the first shell 12 in the recessed manner so as to surround the mechanism section 19. A seal ring 44 is fitted into the seal ring fitting groove 43. The seal ring 44 is formed into a ring shape to surround the mechanism section 19. A portion of the seal ring 44 at a location corresponding to the support cylinder 21 is integrally formed with a circular ring-like support cylinder seal ring portion 45. The support cylinder seal ring portion 45 has an inner diameter that is equal to an outer diameter of the support cylinder 21. If the seal ring 44 fitted into the seal ring fitting groove 43 is sandwitched between the first shell 12 and the second shell 13 in a state in which the support cylinder seal ring portion 45 is fitted over the outer periphery of the support cylinder 21, the seal ring 44 seals an inner space of the mechanism section 19 of the housing 11 from outside together with the support cylinder seal ring portion 45. By sealing only the mechanism section 19 of the housing 11 that at least requires to be sealed, the precision of sealing can be enhanced, and it is possible to simplify the sealing structure of the seal ring fitting groove 43, the seal ring 44 and the support cylinder seal ring portion 45, and the structures of the first shell 12 and the second shell 13. It is thus possible to enhance the sealing performance of the linear actuator 10, and to reduce the manufacturing cost of the entire linear actuator 10.

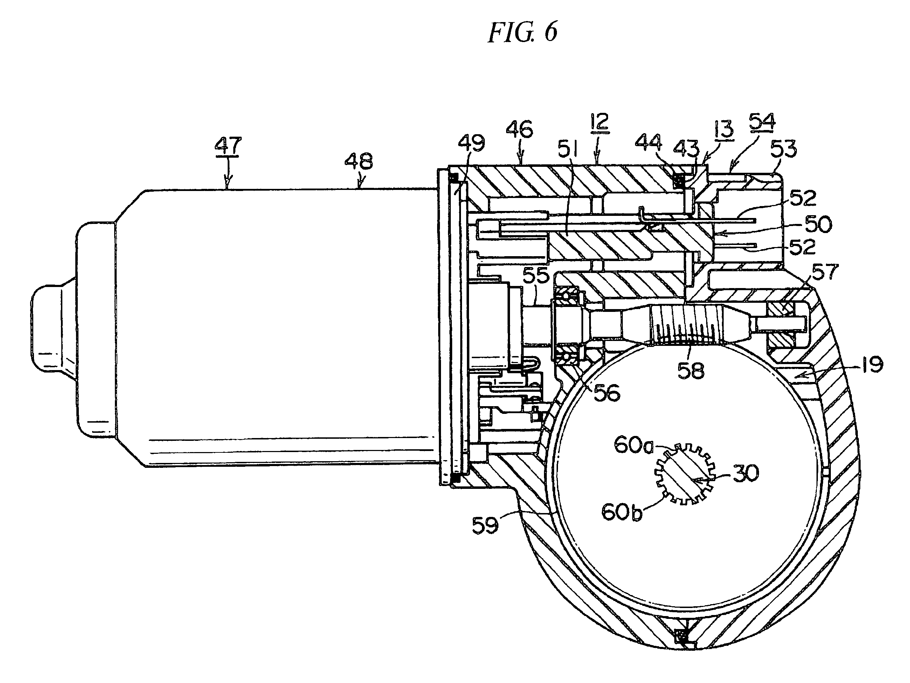

As shown in FIGs. 2 and 6, a motor mounting portion 46 is integrally formed with the housing. The motor mounting portion 46 projects from an intermediate portion of the mechanism section 19 of the first shell 12 in a direction opposite from the mating surface. A motor 47 is mounted on the motor mounting portion 46 such that a center line of the motor 47 is perpendicular to the mating surfaces of the first shell 12 and the second shell 13. That is, the housing 48 of the motor 47 is inserted into the motor mounting portion 46 from the opposite side from the mating surface and is fastened to the first shell 12 by means of a screw or the like. A brush holder 49 closes an opening of the motor housing 48. A terminal 50 is provided on the brush holder 49 in a direction perpendicular to the mating surfaces of the first shell 12 and the second shell 13. The terminal 50 includes a holder 51 made of insulative resin, and a plurality of terminal plates 52 held by the holder 51. The holder 51 is fixed to the brush holder 49. On the other hand, a female coupler portion 53 integrally projects from a portion of the second shell 13 opposed to the terminal 50 in a direction opposite from the mating surface. The terminal 50 is fitted into the female coupler portion 53 and is exposed. Since the terminal 50 is exposed in the female coupler portion 53 in this manner, the linear actuator 10 is integrally provided with a direct coupler 54. The direct coupler 54 can be assembled by butting the first shell 12 and the second shell 13 against each other. Therefore, the number of parts and the number of assembling steps of the entire linear actuator can be reduced, and the manufacturing costs of the linear actuator can also be reduced.

As shown in FIG. 6, the rotation shaft 55 of the motor 47 is inserted into the mechanism section 19 of the housing 11. The rotation shaft 55 is supported at its opposite sides by a first bearing 56 disposed in the first shell 12 and a second bearing 57 disposed in the second shell 13. A worm 58 is formed between the first bearing 56 and the second bearing 57 on the outer periphery of the rotation shaft 55. The worm 58 is meshed with a worm wheel 59 supported by the shaft 30. As shown in FIGs. 6 and 4A, the worm wheel 59 is spline coupled to a portion of the shaft 30 adjacent to the male thread portion 31 such that the worm wheel 59 can slide in the axial direction and rotate in unison. That is, female splines 60a are provided in the inner peripheral surface of a shaft hole of the worm wheel 59, and male splines 60b are provided on the outer peripheral surface of the shaft 30 at location adjacent to the male thread portion 31. The female splines 60a and the male splines 60b are spline coupled to each other. By coupling the worm wheel 59 with the shaft 30 such that the worm wheel 59 can slide in the axial direction and rotate in unison with the shaft 30, it is possible to prevent a load (force) in the axial direction (thrust direction) applied to the shaft 30 from being transmitted to the worm wheel 59.

As shown in FIG. 4A, a bearing disposition portion 61 is formed in a location of the mechanism section 19 of the housing 11 closer to the connecting tool 17 than the worm wheel 59 of the shaft 30. A deep groove ball bearing 62 is disposed in the bearing disposition portion 61. The shaft 30 is rotatably supported by the deep groove ball bearing 62. The size of the deep groove ball bearing 62 is set great so that the deep groove ball bearing 62 can support not only a radial load of the shaft 30 but also a thrust load of the shaft 30. The bearing disposition portion 61 allows the outer peripheral surface of the outer lace of the deep groove ball bearing 62 to slide. The radial rolling bearing which rotatably supports the shaft 30 comprises the large deep groove ball bearing ball bearing 62 and the bearing can slide with the outer peripheral surface in this manner. With this, a thrust bearing which supports the thrust load of the shaft 30 can be omitted. Therefore, the structure of the linear actuator 10 can be simplified and manufacturing cost thereof can be reduced.

A portion of the housing 11 that is adjacent to the bearing disposition portion 61 is formed with a one-way clutch disposition portion 63 which is continuous with the bearing disposition portion 61. A one-way clutch 64 is disposed in the one-way clutch disposition portion 63. The one-way clutch 64 includes a bottomed cylindrical clutch case 65, and a plurality of rollers 66 accommodated in the clutch case 65 such that the rollers 66 turnably abut against the outer peripheral surface of the shaft 30. The rollers 66 mesh with an inner peripheral surface of the clutch case 65 and the outer peripheral surface of the shaft 30 in the cuneus form, thereby connecting the clutch case 65 and the shaft 30 with each other when the shaft 30 rotates in one direction. The clutch case 65 of the one-way clutch 64 is in contact only with the outer lace of the deep groove ball bearing ball bearing 62. A portion of the housing 11 that is adjacent to the one-way clutch disposition portion 63 is formed with a brake plate disposition portion 67. A base plate 68A, a brake plate 68B and a brake washer 68C are disposed on the brake plate disposition portion 67 in this order from the connecting tool 17. The base plate 68A is formed into a substantially circular ring-shape, and a pair of engaging portions projecting from its outer periphery are engaged with the brake plate disposition portion 67 so that the brake plate disposition portion 67 prevents the base plate 68A from rotating. The brake plate 68B is formed into a substantially circular ring-shape whose diameter is smaller than that of the base plate 68A. A plurality of engaging projections projecting from a main surface of the brake plate on the side of the base plate are engaged with engaging recesses of the base plate 68A so that the base plate 68A, i.e., the brake plate disposition portion 67 prevents rotation thereof. The brake washer 68C is formed into a substantially octagonal flat plate shape provided at its center with a shaft insertion hole. The brake washer 68C is fitted into an accommodation hole formed in a main surface of the clutch case 65 of the one-way clutch 64 on the side of the brake plate so that the clutch case 65 prevents the brake washer 68C from rotating. Therefore, the mating surfaces of the brake plate 68B and the brake washer 68C constitute a braking surface.

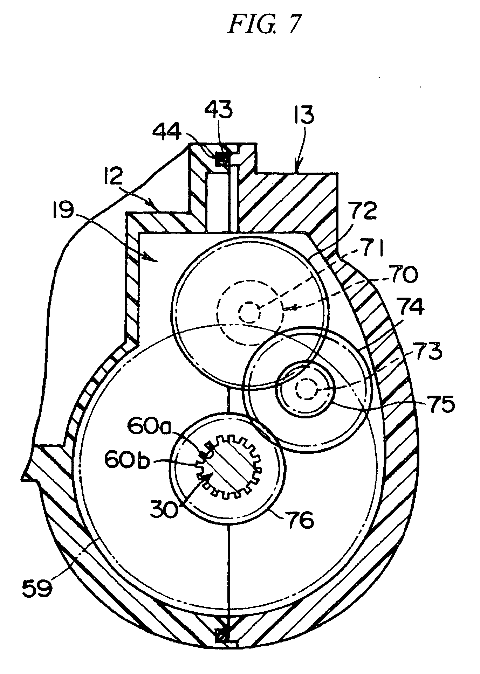

As shown in FIGs. 4A and 7, a potentiosensor disposition portion 69 is formed on one side of the mechanism section 19 of the housing 11 on the opposite side from the bearing disposition portion 61 of the worm 58. A potentiosensor 70 is disposed in the potentiosensor disposition portion 69 in parallel to the shaft 30. A sensor shaft 71 of the potentiosensor 70 is opposed to the worm 58. A driven gear 72 is fixed to the sensor shaft 71 so that the driven gear 72 rotates in unison with the sensor shaft 71. A reduction gear shaft 73 is supported in the potentiosensor 70 of the mechanism section 19 of the housing 11 on the side of the shaft 30 in parallel to the potentiosensor 70. A large-diameter reduction gear 74 and a small-diameter reduction gear 75 are rotatably supported by the reduction gear shaft 73. The large-diameter reduction gear 74 and the small-diameter reduction gear 75 rotate in unison with each other. The driven gear 72 is meshed with the small-diameter reduction gear 75. A pinion 76 which rotates in unison with the shaft 30 is meshed with the large-diameter reduction gear 74. The pinion 76 is disposed and integrally formed coaxially with the worm wheel 59, and is spline coupled to the shaft 30. Therefore, the rotation of the shaft 30 is transmitted to the sensor shaft 71 through the pinion 76, the large-diameter reduction gear 74, the small-diameter reduction gear 75 and the driven gear 72. The potentiosensor 70 converts the rotation amount of the sensor shaft 71 into a rectilinear motion, and converts into a voltage value.

Next, operation and effect will be explained.

The linear actuator 10 is assembled into the bed 1 in advance as shown in FIG. 1. That is, the pivot 3 is inserted through the frame 2 of the bed 1 and through the connecting tool 17 of the linear actuator 10. With this, the linear actuator 10 is rotatably supported by the frame 2 of the bed 1 by the pivot 3. And the pivot 6 on the side of the bed-plate 4 is inserted through the connecting tool 38 of the linear actuator 10 on the side of the moving cylinder 36. With this, the linear actuator 10 is rotatably connected to the bed-plate 4 by the pivot 6. At that time, the distance error between the frame 2 and the link 5 can be absorbed by the long holes 37 and 37 formed in the moving cylinder 36 and the long hole 40 formed in the connecting tool 38. Therefore, the pivot 3 and the pivot 6 can easily be inserted through the connecting tool 17 and the connecting tool 38.

After the linear actuator 10 is assembled into the bed 1, if an operator pushes an operation button of a normal rotation side to tilt up the bed-plate 4, the motor 47 is rotated in the normal direction from the state shown in FIG. 1A, and the driving force of the rotation shaft 55 is transmitted to the shaft 30 through the worm 58 and the worm wheel 59. At the time of the normal rotation, since the connection between the one-way clutch 64 and the shaft 30 is released, only the shaft 30 normally rotates. At that time, no braking force is generated between the brake washer 68C which are fixed to the one-way clutch 64 and the brake plate 68B. If the shaft 30 is normally rotated by the motor 47, the nut 33 moves forward along the support cylinder 21. Therefore, the moving cylinder 36 connected to the nut 33 is pushed out from the support cylinder 21. At that time, the nut 33 slides along the resin detent member 22 of the support cylinder 21. At that time, since the detent member 22 is made of resin, it is possible to prevent noise from being generated. The detent mechanism is for avoiding a case in which the moving cylinder 36 adversely rotates when the linear actuator 10 is not mounted on the bed 1 and a positional relation between the potentiosensor 70 and the moving cylinder 36 is deviated. If the linear actuator 10 is mounted on the bed 1, since the moving cylinder 36 is fixed to the bed 1, the detent mechanism is unnecessary.

If the moving cylinder 36 moves forward, the bed-plate 4 of the bed 1 connected to the connecting tool 37 of the moving cylinder 36 is tilted up as shown in FIG. 1B. At that time, since appropriate idling period exists between the long holes 37 and 37 formed in the moving cylinder 36, the long hole 40 formed in the connecting tool 38 and the pivot 6, it is possible to avoid a sense of disharmony that the bed-plate 4 immediately starts rising when the motor 47 starts in the lower limit position of the bed-plate 4.

The normal rotation of the shaft 30 is reduced in speed and transmitted to the sensor shaft 71 through the pinion 76, the large-diameter reduction gear 74, the small-diameter reduction gear 75 and the driven gear 72. The number of revolution of the sensor shaft 71 is converted into the voltage value by the potentiosensor 70 and is sent to a controller (not shown) which controls operation of the bed 1. If potentio voltage corresponding to a predetermined upper limit position is detected, the controller automatically stops the motor 47. Here, the pinion 76, the large-diameter reduction gear 74, the small-diameter reduction gear 75, the driven gear 72 and the potentiosensor 70 are disposed in the vicinity of the worm wheel 59 and the deep groove ball bearing ball bearing 62 and the pinion 76 is spline couple to the shaft 30. Therefore, it is possible to restrain the potentiosensor 70 from receiving influence of swinging motion of the shaft 30. Therefore, the potentiosensor 70 can precisely detect the rotation amount of the shaft 30, i.e., the stroke amount of the moving cylinder 36, while ensuring a meshing accuracy.

If the operation of the motor 47 is stopped, load (weight of a patient or the like) acting on the bed-plate 4 of the bed 1 is applied to the nut 33 through the moving cylinder 36 as a force in a direction retracting the nut 33. Therefore, a load-side reverse rotation application force which tries to reversely rotate from the moving cylinder 36, i.e., from the load side is applied to the shaft 30 by the operation of female thread portion 32 of the nut 33 and the feeding male thread portion 31 of the shaft 30. Since this load-side reverse rotation application force acts to connect the clutch case 65 and the shaft 30 to each other, braking surfaces are formed by the mating surfaces of the brake washer 68C which is prevented from rotating by the bottom surface of the clutch case 65 of the one-way clutch 64 and the brake plate 68B which is prevented from rotating by the base plate 68A fixed to the housing 11, and the shaft 30 is prevented from rotating reversely. Therefore, the linear actuator 10 can be supported in a state in which the load of the bed-plate 4 is lifted.

Thereafter, if the operator pushes an operation button of a reverse rotation side to tilt down the bed-plate 4 and the motor 47 is reversely rotated, the reverse rotation driving force of the rotation shaft 55 is transmitted to the shaft 30 through the worm 58 and the worm wheel 59. If the shaft 30 is reversely rotated by the motor 47, the nut 33 is moved backward along the support cylinder 21. Therefore, the moving cylinder 36 connected to the nut 33 is pulled into the support cylinder 21. The bed-plate 4 of the bed 1 connected to the connecting tool 37 of the moving cylinder 36 is tiled down by the backward motion of the moving cylinder 36.

At that time, since the shaft 30 is reversely rotated, the one-way clutch 64 is meshed with the shaft 30, but since the braking force between the brake plate 68B and the brake washer 68C is set smaller than the driving force with respect to the shaft 30 of the motor 47, the one-way clutch 64 idles with respect to the housing 11, and this allows the shaft 30 to reversely rotate with respect to the housing 11. That is, if the shaft 30 reversely rotates with respect to the housing 11, the nut 33 moves backward along the support cylinder 21 and thus, the moving cylinder 36 connected to the nut 33 is pulled into the support cylinder 21, and the bed-plate 4 of the bed 1 connected to the connecting tool 37 of the moving cylinder 36 is tilted down.

The reverse rotation of the shaft 30 is reduced in speed and transmitted to the sensor shaft 71 through the pinion 76, the large-diameter reduction gear 74, the small-diameter reduction gear 75 and the driven gear 72. The number of revolution of the sensor shaft 71 is converted into the voltage value by the potentiosensor 70 and is sent to a controller (not shown) which controls operation of the bed 1. If potentio voltage corresponding to a predetermined lower limit position is detected, the controller automatically stops the motor 47.

If the operation of the motor 47 is stopped, the load (weight of a patient or the like) of the bed-plate 4 is mechanically supported by the frame 2 of the bed 1, a force for retreating the nut 33 is not applied to the moving cylinder 36 and thus, the load-side reverse rotation application force is not applied to the shaft 30. Even if the load-side reverse rotation application force is always applied to the shaft 30 in a state in which the bed-plate 4 is tilted down, the reverse rotation of the shaft 30 is prevented by the above-described effect.

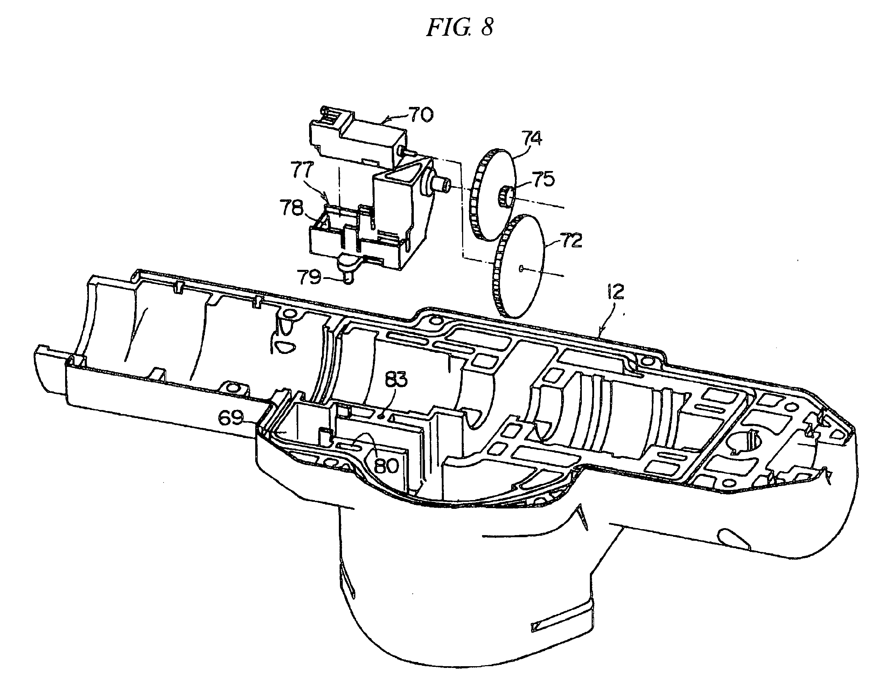

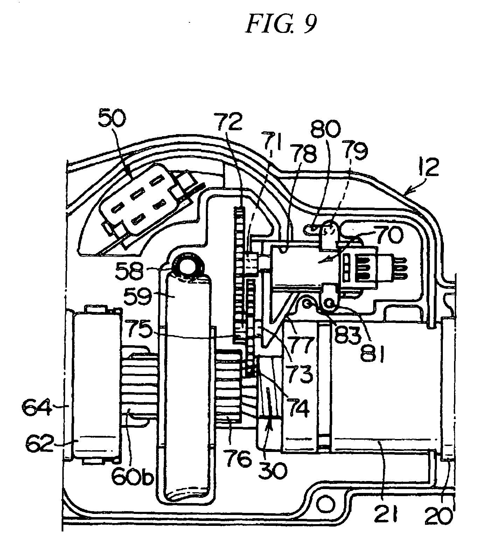

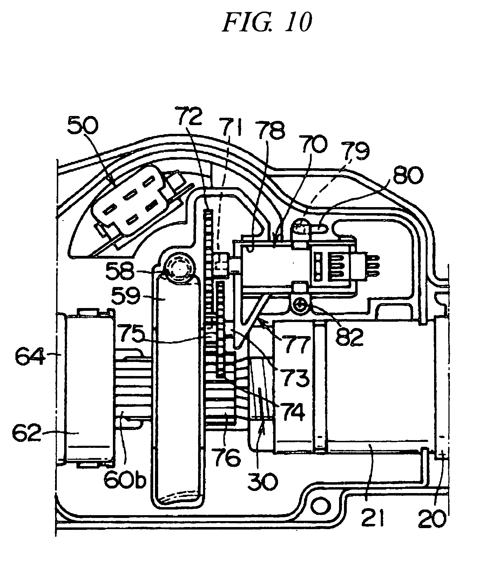

As described above, if the potentiosensor 70 detects potentio voltage values respectively corresponding to the upper limit position and the lower limit position of the moving cylinder 36, the motor 47 is automatically stopped. Therefore, it is necessary to precisely match the origin voltage value of the potentiosensor 70 and the origin position of the moving cylinder 36 with each other. Hence, in this embodiment, origin points of the potentiosensor 70 and the moving cylinder 36 are aligned with each other in accordance with the procedure shown in FIGs. 8 to 10. FIG. 8 is an exploded perspective view of the potentiosensor disposition portion 69 as viewed from the motor mounting portion 46 in a state before the potentiosensor disposition portion 69 is assembled, and this state corresponds to laterally reversed FIGS. 9 and 10.

As shown in FIG. 8, the driven gear 72 is mounted on the sensor shaft of the potentiosensor 70, and integral large-diameter reduction gear 74 and small-diameter reduction gear 75 are mounted on the reduction gear shaft 73 of a potentio stay 77. A potentiosensor signal coupler (not shown) is connected to the potentiosensor 70. The potentiosensor 70 is accommodated in a holding recess 78 of the potentio stay 77.

As shown in FIG. 9, the potentiosensor 70 on which the driven gear 72 is mounted and the potentio stay 77 on which the reduction gear is mounted are assembled to the first shell 12 whose moving cylinder 36 is previously aligned to the origin position. At that time, a guide pin 79 of the potentio stay 77 is slidably fitted into a guide groove 80 formed in the first shell 12 in a direction parallel to the shaft 30, and the potentio stay 77 is brought into a position away from the worm wheel 59 as a whole. In this state, the large-diameter reduction gear 74 is not meshed with the pinion 76. In this state, the potentiosensor 70 is adjusted to a predetermined origin voltage value by rotating the driven gear 72.

Next, if the potentio stay 77 slides from the direction of the moving cylinder 36 toward the worm wheel 59, the large-diameter reduction gear 74 is meshed with the pinion 76 as shown in FIG. 10. At that time, since the guide pin 79 is guided by the guide groove 80, the large-diameter reduction gear 74 can straightly be meshed with the pinion 76 without rotating. Thereafter, a screw 82 is inserted into a mounting hole 81 of the potentio stay 77, the screw 82 is threadedly inserted into a screw hole 83 formed in the first shell 12, and the potentio stay 77 is fixed to the first shell 12.

According to the embodiment, the positioning operation of the moving cylinder 36 and the voltage value adjusting operation of the potentiosensor 70 can continuously be carried out on the first shell 12. Therefore, the rotational deviation of the sensor shaft 71 when the potentiosensor 70 is meshed with the pinion 76 can be prevented, and the origin alignment precision can be enhanced. As a result, detection precision of the rotation amount of the shaft of the potentiosensor, i.e., detection precision of the stroke amount of the moving cylinder 36 can be enhanced. Thus, tilting up and down control performance of the bed-plate 4 of the linear actuator 10 can be enhanced.

The present invention is not limited to the embodiment, and of course the invention can variously be modified within a range not departing from its subject matter which is covered by the claims.

Although the linear actuator is used for the medical/care bed in the embodiment, the actuator of the invention is not limited to this, and the actuator can also be applied to electrical equipment of an automobile or the like.

### INDUSTRIAL APPLICABILITY

The present invention can be utilized for enhancing the assembling operability of a linear actuator having a position detection apparatus.

## Claims

1. A linear actuator comprising:
a shaft (30) having a male thread portion (31);
a worm gear speed reducer (58, 59) for reducing rotation of a motor (47) in speed and transmitting the reduced rotation to the shaft (30);
a female thread member (33) which is threadedly engaged with the male thread portion (31) and which moves forward and backward by normal or reverse rotation of the shaft (30);
a moving cylinder (36) which is fixed to the female thread member (33) and which moves forward and backward with respect to a housing (11); and
a potentiosensor (70) which detects a position of the moving cylinder (36) via a reduction mechanism by converting a rotation amount of the shaft (30) into a voltage value,
**characterized in that it further comprises:**
a guide groove (80) formed on the housing (11), the guide groove (80) extending in a direction parallel to the shaft (30);and
wherein the potentiosensor (70) has a sensor shaft (71) parallel to the shaft (30) and is accommodated in and fixed to a potentio stay (77) in parallel with the shaft (30), the potentio stay (77) having a guide pin (79) slidably fitted into the guide groove (80), and being movable in parallel with the shaft with the guide pin (79) being fitted into the guide groove (80); and
wherein the rotation of the shaft (30) is transmitted to the sensor shaft (71) through a reduction mechanism comprising:
• a pinion (76) which rotates in unison with the shaft (30), the pinion (76) having teeth parallel to the shaft (30),
• a large-diameter reduction gear (74) rotating in unison with the sensor shaft (71) of the potentiosensor (70); and being rotatably supported by a reduction gear shaft (73), the reduction gear shaft (73) being directed in a direction parallel to the shaft (30) and supported by the potentio stay (77),
• a driven gear (72) which is fixed to the sensor shaft (71) so that the driven gear (72) rotates in unison with the sensor shaft (71); and
• a small-diameter reduction gear (75) which is rotatably supported by the reduction gear shaft (73), and rotates in unison with the large-diameter reduction gear (74),
• the driven gear (72) is meshed with the small-diameter reduction gear (75), and
wherein the large-diameter reduction gear (74) is engaged with the pinion (76) when the guide pin (79) is placed at one end side portion of the guide groove (80), the large-diameter reduction gear (74) is disengaged from the pinion (76) when the guide pin (79) is placed at the other end side portion of the guide groove (80).

2. The linear actuator according to claim 1, wherein
the potentio stay (77) has a mounting hole (81) into which a screw (82) for fixing the potentio stay (77) to the housing (11) is inserted.

## Patentansprüche

1. Linearaktuator umfassend:
einen Schaft (30) mit einem männlichen Gewindeabschnitt (31);
einen Schneckengetriebe-Geschwindigkeitsreduzierer (58, 59) zur Reduzierung der Rotation eines drehenden Motors (47) und zum Übertragen der reduzierten Rotation auf den Schaft (30);
ein weibliches Gewindeteil (33), welches im Gewindeverbund mit dem männlichen Gewindeabschnitt (31) steht und welches sich bei einer normalen oder entgegengesetzten Rotation des Schafts (30) vorwärts und rückwärts bewegt;
einen beweglichen Zylinder (36), welcher an dem weiblichen Gewindeteil (33) befestigt ist und welcher sich in Bezug auf ein Gehäuse (11) vorwärts und rückwärts bewegt; und
einen Potentiometersensor (70), welcher die Position des beweglichen Zylinders (36) mittels eines Untersetzungsmechanismus durch Umwandlung eines Rotationsbetrags des Schafts (30) in einen Spannungswert ermittelt,
**dadurch gekennzeichnet, dass** er des Weitem umfasst:
eine an dem Gehäuse (11) ausgebildete Führungsnut (80), die Führungsnut (80) erstreckt sich in einer Richtung parallel zu dem Schaft (30); und
wobei der Potentiometersensor (70) einen zu dem Schaft (30) parallelen Sensorschaft (71) aufweist und parallel zu dem Schaft (30) in einer Potentiometerabstützung (77) untergebracht und daran befestigt ist, die Potentiometerabstützung (77) weist einen rutschbar in die Führungsnut (80) eingepassten Führungsstift (79) auf, und ist parallel mit dem Schaft mit dem rutschbar in der Führungsnut (80) eingepassten Führungsstift (79) bewegbar; und
wobei die Rotation des Schafts (30) zu dem Sensorschaft (71) durch einen Untersetzungsmechanismus übertragen wird, der umfasst:
• ein Getrieberad (76), das in Einklang mit dem Schaft (30) rotiert, das Getrieberad (76) weist zu dem Schaft (30) parallele Zähne auf,
• ein Untersetzungszahnrad (74) mit großem Durchmesser, welches in Einklang mit dem Sensorschaft (71) des Potentiometersensors (70) rotiert; und drehbar mittels eines Untersetzungszahnradschaft (73) gelagert ist, wobei der Untersetzungszahnradschaft (73) in einer zu dem Schaft (30) parallelen Richtung ausgerichtet und durch die Potentiometerabstützung (77) abgestützt ist,
• ein angetriebenes Zahnrad (72), welches an dem Sensorschaft (71) befestigt ist, so dass das angetriebene Zahnrad (72) in Einklang mit dem Sensorschaft (71) rotiert; und
• ein Untersetzungszahnrad (75) mit kleinem Durchmesser, welches drehbar mittels des Untersetzungszahnradschafts (73) gelagert ist, und in Einklang mit dem Untersetzungszahnrad (74) mit großem Durchmesser rotiert,
• das angetriebene Zahnrad (72) ist in Eingriff mit dem Untersetzungszahnrad (75) mit kleinem Durchmesser, und
wobei das Untersetzungszahnrad (74) mit großem Durchmesser im Eingriff mit dem Getrieberad (76) steht, wenn der Führungsstift (79) an einem Endabschnitt der Führungsnut (80) angeordnet ist, das Untersetzungszahnrad (74) mit großem Durchmesser von dem Getrieberad (76)ausgerückt ist, wenn der Führungsstift (79) an dem anderen Endabschnitt der Führungsnut (80) angeordnet ist.

2. Linearaktuator nach Anspruch 1, wobei
die Potentiometerabstützung (77) ein Montageloch (81) aufweist, in welches eine Schraube (82) zur Befestigung der Potentiometerabstützung (77) an dem Gehäuse (11) eingesetzt werden kann.

## Revendications

1. Actionneur linéaire comprenant :
un arbre (30) ayant une partie filetée mâle (31) ;
un réducteur de vitesse à engrenage à vis sans fin (58, 59) pour réduire la rotation d'un moteur (47) en vitesse et transmettre la rotation réduite à l'arbre (30) ;
un organe fileté femelle (33) qui est en prise par vissage avec la partie filetée mâle (31) et qui se déplace vers l'avant et vers l'arrière par une rotation normale ou inversée de l'arbre (30) ;
un cylindre mobile (36) qui est fixé à l'organe fileté femelle (33) et qui se déplace vers l'avant et vers l'arrière par rapport à un boîtier (11) ; et
un capteur potentiométrique (70) qui détecte une position du cylindre mobile (36) via un mécanisme de réduction en convertissant une quantité de rotation de l'arbre (30) en une valeur de tension ;
**caractérisé en ce qu'**il comprend en outre :
une rainure de guidage (80) formée sur le boîtier (11), la rainure de guidage (80) s'étendant dans une direction parallèle à l'arbre (30) ; et
dans lequel le capteur potentiométrique (70) a un arbre de capteur (71) parallèle à l'arbre (30) et est reçu dans un support potentiométrique (77) et fixé à celle-ci parallèlement à l'arbre (30), le support potentiométrique (77) ayant une goupille de guidage (79) insérée de manière coulissante dans la rainure de guidage (80), et étant mobile parallèlement à l'arbre avec la goupille de guidage (79) étant insérée dans la rainure de guidage (80) ; et
dans lequel la rotation de l'arbre (30) est transmise à l'arbre de capteur (71) par un mécanisme de réduction comprenant :
• un pignon (76) qui tourne conjointement avec l'arbre (30), le pignon (76) ayant des dents parallèles à l'arbre (30),
• un engrenage de réduction à grand diamètre (74) tournant conjointement avec l'arbre de capteur (71) du capteur potentiométrique (70) ; et étant supporté en rotation par un arbre d'engrenage de réduction (73), l'arbre d'engrenage de réduction (73) étant dirigé dans une direction parallèle à l'arbre (30) et supporté par le support potentiométrique (77),
• un engrenage entraîné (72) qui est fixé à l'arbre de capteur (71) de sorte que l'engrenage entraîné (72) tourne conjointement avec l'arbre de capteur (71) ; et
• un engrenage de réduction à petit diamètre (75) qui est supporté en rotation par l'arbre d'engrenage de réduction (73), et tourne conjointement avec l'engrenage de réduction à grand diamètre (74),
• l'engrenage entraîné (72) s'engrène avec l'engrenage de réduction à petit diamètre (75), et
dans lequel l'engrenage de réduction à grand diamètre (74) est en prise avec le pignon (76) lorsque la goupille de guidage (79) est placée sur une partie latérale d'extrémité de la rainure de guidage (80), l'engrenage de réduction à grand diamètre (74) est libéré du pignon (76) lorsque la goupille de guidage (79) est placée sur l'autre partie latérale d'extrémité de la rainure de guidage (80).

2. Actionneur linéaire selon la revendication 1, dans lequel le support potentiométrique (77) a un trou de montage (81) dans lequel est insérée une vis (82) pour fixer le support potentiométrique (77) au boîtier (11).
